# EUROPÄISCHE PATENTSCHRIFT

(11) **EP 0 810 018 B1**
(45) Veröffentlichungstag und Bekanntmachung des Hinweises auf die Patenterteilung: **22.09.2004**
(21) Anmeldenummer: 97810301.8
(22) Anmeldetag: 15.05.1997
(51) Int. Cl.: B01D 29/15, B01D 29/48, B01D 29/46

(54) **Rückspülbare Filteranordnung und Filterkerze**
Backwash filtering device and filter candles
Dispositif filtrant lavalbe par reflux et bougies filtrantes

(30) Priorität: 31.05.1996 CH 137596
(43) Veröffentlichungstag der Anmeldung: 03.12.1997
(73) Patentinhaber: Filtrox-Werk AG, CH-9001 St. Gallen (CH)
(72) Erfinder: Rech, Raffaello, 9000 St. Gallen (CH); Baumann, Erwin, 9536 Schwarzenbach (CH)
(74) Vertreter: Hepp, Dieter

(56) Entgegenhaltungen:
- BE-A- 541 989
- DE-A- 3 916 888
- FR-A- 1 369 688
- GB-A- 814 335
- US-A- 3 387 712

## Beschreibung

Die Erfindung betrifft eine rückspülbare Filteranordnung und eine Filterkerze.

Zur Filtration von Flüssigkeiten, insbesondere Getränken wie beispielsweise Bier, werden häufig rückspülbare Filteranordnungen mit Anschwemmkerzenfiltern verwendet. Solche Filteranordnungen sind durch eine Öffnungen aufweisende Lochplatte in einen Filtratraum und in einen Unfiltratraum aufgeteilt. In die Öffnungen werden Filterkerzen, insbesondere Anschwemmkerzen befestigt. Damit die zu reinigende Flüssigkeit vom Unfiltratraum in den Filtratraum gelangen kann, muss sie die Oberfläche der Filterkerzen durchströmen, wobei Verunreinigungen der Flüssigkeit zurückgehalten werden. Häufig verwendet werden Spaltfilterkerzen, bei welchen ein Draht spiralförmig derart um Haltestäbe aufgewikelt wird, dass zwischen den einzelnen Wicklungen ein Spalt von genau definierter Grösse (typischerweise 40 - 100 µm) gebildet wird.

Aus der EP-B-203 206 ist beispielsweise eine solche Filteranordnung bekannt. Eine Halteeinrichtung wird in die Öffnungen der Lochplatte eingesetzt und die Filterkerze wird auf diese Halteeinrichtung aufgeschraubt. Die Filterkerze weist in ihrem Inneren ein Steigrohr auf, durch welches die filtrierte Flüssigkeit vom Innern der Filterkerze in den Filtratraum steigen kann. Es hat sich nun gezeigt, dass einerseits die Schraubverbindung und andererseits das Vorsehen eines Steigrohrs, insbesondere aber die Kombination dieser beiden Elemente verschiedene Nachteile aufweist. Besonders bei der heute immer häufigeren kalten Filtration von Bier ergeben sich Probleme durch in den Rillen der Schraubverbindungen abgelagerten Verunreinigungen und entsprechendes Bakterium oder Pilz-Wachstum. Ausserdem entstehen zwischen der Aussenfläche des Steigrohrs und der Innenfläche der in die Öffnungen der Lochplatte eingesetzten Halteeinrichtung schwer rückspülbare Toträume, in welchen sich ebenfalls Bakterien festsetzen können.

Bei der Anschwemmfiltration wird ein Filterhilfsmittel auf die Aussenfläche der Filterkerzen aufgetragen. Von Zeit zu Zeit müssen die aus der gereinigten Flüssigkeit entfernten Verunreinigungen wieder von der Oberfläche der Filterkerze entfernt werden. Dazu wird die Flussrichtung der Filteranordnung umgekehrt und die Filterkerzen werden mit einem Reinigungsmedium in umgekehrter Richtung durchgespült. Durch diese Rückspülung wird der auf der Oberfläche der Filterkerze aufgetragene Filterkuchen abgelöst. Beim Stand der Technik wird aber meistens bei dieser Rückspülung weder der Raum zwischen dem Steigrohr und der in die Öffnungen der Lochplatte eingesetzten Halteeinrichtung noch die Schraubverbindung zum Verfestigen der Kerzenfilter an dieser Halteeinrichtung durchspült. Verunreinigungen, die sich in diesen Räumen festgesetzt haben, können durch Rückspülen sehr schwer entfernt werden.

Aus der DE-A-41 01 168 ist eine ähnliche Spaltfilterkerzenanordnung bekannt, die ohne die Verwendung von Schraubverbindungen zum Festhalten der Filterkerzen auskommt. Das Steigrohr weist auf seinen beiden Endseiten eine Kopfplatte auf. Eine Druckfeder stützt sich einerseits auf der Filtratseite der Lochplatte und andererseits auf der filtratseitigen Kopfplatte des Steigrohres ab. Auf der unfiltratseitigen Kopfplatte des Steigrohrs sind die die Kerzenwand tragenden Haltestäbe der Filterkerze angebracht. Auf der der Lochplatte zugewandten Seite der Haltestäbe ist eine Dichtanordnung vorgesehen, welche sich dichtend um das Steigrohr legt und welche in eine konische Aufweitung der Öffnung in der Lochplatte passt. Die von der Druckfeder aufgebrachte Kraft wird über das Steigrohr und die Haltestäbe auf die Dichteinrichtung geleitet, wodurch ein dichtendes Einfügen des Steigrohrs in die Öffnung der Lochplatte möglich ist. Auch diese Filteranordnung weist verschiedene Nachteile auf. So können sich in dem Ringspalt zwischen der Aussenseite des Steigrohrs und den Öffnungen in der Lochplatte ebenfalls Verunreinigungen ablagern, wobei diese Öffnungen schwer durchspülbar sind. Andererseits wird die ganze Kraft zum Anpressen der Dichteinrichtung über die Wand der Filterkerze geleitet. Aus diesem Grund kann nicht eine beliebig hohe Anpresskraft gewählt werden. Zu grosse Anpresskräfte würden zu einer Verformung der Haltestäbe und zu einer Veränderung der Spaltbreite der Kerzenwand führen.

Die Aufgabe der vorliegenden Erfindung besteht darin, die Nachteile des Bekannten zu vermeiden, insbesondere auf wirtschaftliche Weise eine rückspülbare Filteranordnung und eine einfach herstellbare und mechanisch stabile Filterkerze zu schaffen, welche keine Räume aufweist, in denen sich Verunreinigungen absetzen können und welche keine nicht oder schlecht rückspülbaren Toträume aufweist. Eine weitere Aufgabe der Erfindung besteht darin, eine rückspülbare Filteranordnung und eine Filterkerze zu schaffen, mittels welchen eine optimale Abdichtung zwischen Filtratraum und Unfiltratraum im Bereich der Öffnungen der Lochplatte möglich ist.

Erfindungsgemäss werden diese Aufgaben mit einer Filterkerze und mit einer rückspülbaren Filteranordnung gemäss den Merkmalen der unabhängigen Patentansprüche gelöst.

Die Filterkerze beinhaltet eine Kerzenwand und ein die Kerzenwand form- und/oder kraftschlüssig haltendes Kopfteil, wobei das Kopfteil wenigstens einen Durchlass und eine Anschlagfläche zur dichtenden Anlage an die Unfiltratseite einer Halteanordnung einer rückspülbaren Filteranordnung aufweist, wobei das Kopfteil einstückig mit einem durch die Öffnungen einer Halteanordnung führbaren Tragelement ausgebildet oder verbunden ist, welches in das Innere der Filterkerze ragt, wobei das Tragelement filtratseitig eine Anschlagfläche für auf der Filtratseite der Halteanordnung abstützbare Spannmittel aufweist und wobei die Filterkerze mit dem Tragelement derart an der Halteanordnung befestigbar ist, dass der wenigstens eine Durchlass in Verbindung mit einem Durchlasskanal zwischen der äusseren Oberfläche des Tragelementes und der inneren Oberfläche der Öffnungen der Halteanordnungen bringbar ist.

Alternativ beinhaltet die Filterkerze für eine rückspülbare Filteranordnung eine Kerzenwand und ein die Kerzenwand formund/oder kraftschlüssig haltendes Kopfteil, wobei das Kopfteil wenigstens einen Durchlass und eine Anschlagfläche zur dichtenden Anlage an die Unfiltratseite einer Halteanordnung einer rückspülbaren Filteranordnung aufweist, wobei das Kopfteil einstückig mit einem passgenau durch eine Öffnung einer Halteanordnung führbaren Steigrohr ausgebildet oder verbunden ist, welches in das Innere der Filterkerze ragt, und wobei das Steigrohr filtratseitig eine Anschlagfläche für auf der Filtratseite der Halteanordnung abstützbare Spannmittel aufweist.

Die rückspülbare Filteranordnung weist ein Gehäuse mit einer Öffnungen aufweisenden Halteanordnung auf. Das Gehäuse ist in einen Filtratraum und in einen Unfiltratraum unterteilt und weist wenigstens eine in den Öffnungen der Halteanordnung angeordnete Filterkerze auf. Die Filterkerze wird mit Spannmitteln auf der Halteanordnung festgehalten und weist eine Kerzenwand auf, welche Flüssigkeit durchfliessen lässt und Verunreinigungen zurückhält. Vorzugsweise wird eine Spaltfilterkerze verwendet.

Die Filterkerzen weisen ausserdem ein Tragelement mit einer filtratseitig angeordneten Anschlagfläche auf. Die Spannmittel stützen sich einerseits auf der Anschlagfläche des Tragelementes und andererseits auf der Filtratseite der Halteanordnung ab.

Das Tragelement ist als Stab ausgebildet, der die Öffnung der Halteanordnung durchdringt. Die Filterkerzen weisen ein mit Durchlässen versehenes Kopfteil auf, das mit einer Anschlagfläche zur dichtenden Anlage an die Unfiltratseite der Halteanordnung versehen ist. Da das Kopfteil einstückig mit dem Tragstab ausgebildet oder mit diesem verbunden ist, wirkt die Anschlagfläche als Gegenlager zur Anschlagfläche des Tragelements und die Filterkerze wird durch die Spannmittel auf der Halteanordnung festgehalten. Das Kopfteil ist ausserdem formund/oder kraftschlüssig mit der Kerzenwand verbunden. Die Filterkerze ist dadurch freihängend im Unfiltratraum angeordnet. Eine unerwünschte Kompression wird.dadurch vermieden. Mit dieser Anordnung werden ausserdem erfolgreich unerwünschte Schraubverbindungen vermieden.

In einem anderen Ausführungsbeispiel ist der Tragstab einer Filterkerze so ausgebildet, dass zwischen seiner äusseren Oberfläche und der inneren Oberfläche der Öffnungen in einer Halteanordnung wenigstens in Segmenten der Öffnungen der Halteanordnung ein Durchlasskanal zum Führen des Filtrats vom Innern der Filterkerze in den Filtratraum gebildet wird. Auf diese Weise werden die aus dem Stand der Technik bekannten Toträume im Bereich der Oberfläche der Öffnungen in der Lochplatte vermieden.

Obschon die beiden genannten Ausführungsbeispiele für sich allein bereits Vorteile aufweisen, hat es sich gezeigt, dass eine Kombination dieser Ausführungsbeispiele zu einem besonders vorteilhaften Resultat führt. Einerseits wird durch die spezifische Halterung der Filterkerzen jegliche Schraubverbindung vermieden und andererseits wird durch das Bilden eines Durchlasskanals zwischen dem Tragstab und den Öffnungen der Lochplatte ein besonders effizientes Rückspülen gewährleistet.

Eine besonders günstige Ausführungsform ergibt sich, wenn das Gehäuse durch die Öffnungen aufweisende Halteanordnung in Filtrat- und Unfiltratraum aufgeteilt wird. Die Halteanordnung ist in diesem Fall als Lochplatte ausgebildet.

Die Erfindung lässt sich besonders einfach realisieren, wenn der Tragstab in das Innere der Filterkerze ragt und auf seinem unfiltratseitigen Ende eine Verteilanordnung zur Verteilung des Rückspülstromes auf die Kerzenwand aufweist.

Als Spannmittel -können beispielsweise Spiralfedern, Federscheiben oder andere, eine genügend hohe Elastizität aufweisende Körper verwendet werden.

Zur Erhöhung des Durchsatzes vom Innern der Filterkerze in den Filtratraum kann das Tragelement ausserdem eine vertikale Zusatzbohrung aufweisen und als Steigrohr ausgebildet sein. Dazu wird ein rohrförmiges Tragelement verwendet, das auf seiner Aussenfläche über die gesamte Höhe verteilt Durchlässe zum Einund Austritt der filtrierten Flüssigkeit aufweist.

Das die Filterkerze tragende Kopfteil kann ringförmig ausgebildet sein. Der Tragstab wird durch das Innere des Rings geführt und teilweise mit der Innenseite des Kopfteils verschweisst. Vorteilhaft wird ein auf zwei Seiten abgeflachter zylindrischer Tragstab verwendet. Zwischen den abgeflachten Seiten des Tragstabs und der Innenfläche des Kopfteils werden die Durchlässe für die Flüssigkeit gebildet.

Es ist aber auch denkbar, das Kopfteil und den Tragbolzen einstückig auszubilden und das Kopfteil mit Bohrungen zum Durchlass der Flüssigkeit zu versehen.

Eine besonders wirkungsvolle Dichtung zwischen dem Kopfteil der Filterkerze und der Unfiltratseite der Lochplatte ergibt sich bei der Verwendung eines zwischen das Kopfteil und die Lochplatte eingesetzten O-Rings.

Die erfindungsgemässe Filterkerze für eine rückspülbare Filteranordnung weist eine Kerzenwand und ein die Kerzenwand formund/oder kraftschlüssig haltendes Kopfteil auf. Das Kopfteil ist mit wenigstens einem Durchlässen für das Filtrat und mit einer Anschlagfläche zu dichtenden Anlage an die Unfiltratseite einer Halteanordnung der rückspülbaren Filteranordnung versehen. Das Kopfteil ist einstückig mit einem durch die Öffnungen einer Halteanordnung der Filteranordnung führbaren Tragelement ausgebildet oder verbunden. Das Tragelement weist filtratseitig eine Anschlagseite für auf der Filtratseite der Halteanordnung abstützbare Spannmittel auf. Mit einer solchen Anordnung werden wirkungsvoll Schraubverbindungen vermieden, ohne dass die Filterkerze einer Kompression durch die Haltevorrichtung ausgesetzt wäre.

Eine Filterkerze gemäss einem anderen Ausführungsbeispiel der Erfindung weist ebenfalls eine Kerzenwand und ein die Kerzenwand form- und/oder kraftschlüssig haltendes Kopfteil auf. Das Kopfteil weist ebenfalls Durchlässe auf. Die Durchlässe sind um die vertikale Achse des Kopfteils exzentrisch angeordnet. Das Kopfteil ist ausserdem mit einem Tragelement verbunden. Die Aussenfläche des Tragelements weist einen maximalen Abstand von der Achse des Kopfteils auf, der kleiner ist als der minimale Abstand der Durchlässe von der Achse des Kopfteils. Wesentlich ist, dass das Tragelement auf dem Kopfteil aufgesetzt ist und von den Durchlässen in dem Kopfteil umgeben ist.

Die Erfindung wird im folgenden in Ausführungsbeispielen und anhand der Zeichnungen näher erläutert. Es zeigen:

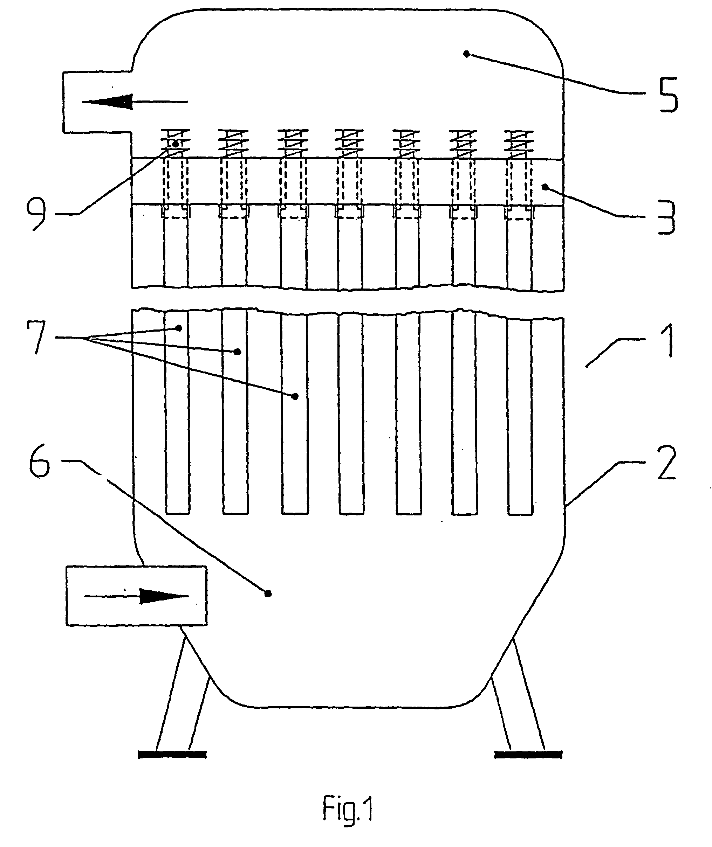

- Figur 1: eine Filteranordnung mit den Merkmalen der Erfindung,
- Figur 2a: einen Querschnitt durch den oberen Teil einer Filterkerze gemäss Figur 1,
- Figur 2b: eine Draufsicht auf eine Filterkerze entlang der Linie B-B in Figur 2a,
- Figur 2c: eine Draufsicht auf die Filteranordnung gemäss Figur 2a,
- Figur 3: einen Querschnitt des oberen Teils einer Filterkerze eines alternativen Ausführungsbeispiels,
- Figur 4: einen Querschnitt des oberen Teils einer Filterkerze eines weiteren Ausführungsbeispiels,
- Figur 5a und 5b: einen Querschnitt und eine Draufsicht wie in Figur 2b und 2c eines einstückig ausgebildeten Kopfteils mit einem Tragelement.

Eine Filteranordnung 1 besteht im wesentlichen aus einem Gehäuse 2 und einer Halteanordnung 3. Die Halteanordnung 3 ist als Lochplatte ausgebildet und unterteilt das Gehäuse 2 in einen Filtratraum 5 und in einen Unfiltratraum 6. Die Halteanordnung 3 weist Öffnungen 4 auf, in welchen Filterkerzen 7 befestigt sind. Die Filterkerzen 7 sind mittels Spannmitteln 9 auf der Halteanordnung 3 festgeklemmt.

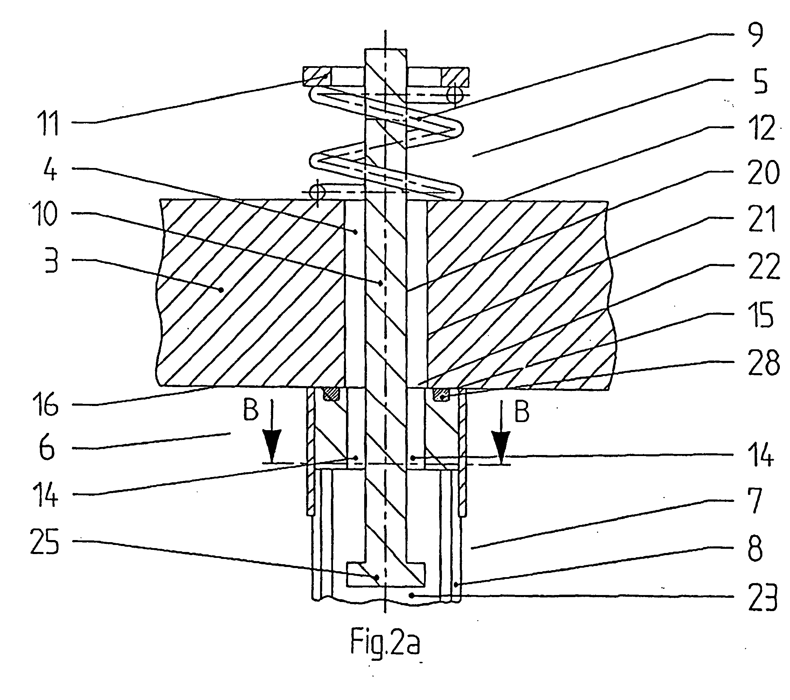

Figur 2a zeigt den oberen Teil einer Filterkerze 7 im Querschnitt. Die Filterkerze 7 weist ein Kopfteil 13 und eine Kerzenwand 8 auf. Die Kerzenwand 8 ist kraftschlüssig mit dem Kopfteil 13 verbunden. Das Kopfteil 13 ist mit Durchlässen 14 sowie einer Anschlagfläche 15 versehen. Das Kopfteil 13 ist ringförmig ausgebildet und auf seiner Innenseite einstückig mit einem Tragelement 10 verbunden, insbesondere verschweisst. Das Tragelement 10 wird durch einen zweiseitig abgeflachten zylindrischen Stab gebildet, der an seinen nicht abgeflachten Bereichen mit der Innenseite des Kopfteils 13 verbunden ist. Das Halteelement 10 weist ausserdem filtratseitig einen Anschlag 11 auf.

Die Filterkerze 7 wird durch eine Halteanordnung 3 gehalten. Die Halteanordnung 3 weist Öffnungen 4 auf, durch welche das Tragelement 10 geführt wird. Das Tragelement 10 ist so dimensioniert, dass zwischen der inneren Oberfläche 21 der Öffnung 4 und der äusseren Oberfläche 20 des Tragelements 10 ein Durchlasskanal 22 gebildet wird.

Die Filterkerze 7, resp. deren Tragelement 10 wird mit einem Spannmittel 9 in der Form einer Spiralfeder auf die Halteanordnung 3 gepresst. Das Spannmittel 9 ist einerseits auf dem Anschlag 11 des Tragelements 10 und andererseits auf der Filtratseite 12 der Halteanordnung 3 abgestützt. Das Kopfteil 13 bildet mit seinem Anschlag 15 ein Gegenlager und wird gegen die Unfiltratseite 16 der Halteanordnung 3 gepresst. Zum Erhöhen der Dichtwirkung ist zwischen der Halteanordnung 3 und dem Kopfteil 13 ein O-Ring 28 eingesetzt.

Eine dichtende Verbindung zwischen dem oberen Rand der Kerzenwand 8 und dem Kopfteil 13 wird mit einer Hülse 17 erreicht, die sich über die Kerzenwand nach unten erstreckt.

Beim Filtrationsvorgang gelangt die Flüssigkeit durch die Kerzenwand 8 vom Unfiltratraum 6 in das Innere 23 der Filterkerze 3 und wird dabei gereinigt. Die gereinigte Flüssigkeit wird über die Durchlässe 14 im Kopfteil 13 und über den Durchlasskanal 22 zwischen dem Tragelement 10 und der Halteanordnung 3 in den Filtratraum 5 geführt. Zum Reinigen der Kerzenwand 8 wird die Filteranordnung mit einem Reinigungsmedium rückgespült. Damit die Kerzenwand 8 möglichst gleichmässig von dem Reinigungsmedium durchspült wird, ragt das Tragelement 10 in das Innere 23 der Filterkerze 7 hinein und weist an seinem unteren Ende eine Verteilanordnung 25, beispielsweise in der Form eines verdickten, pilzförmigen Endes auf.

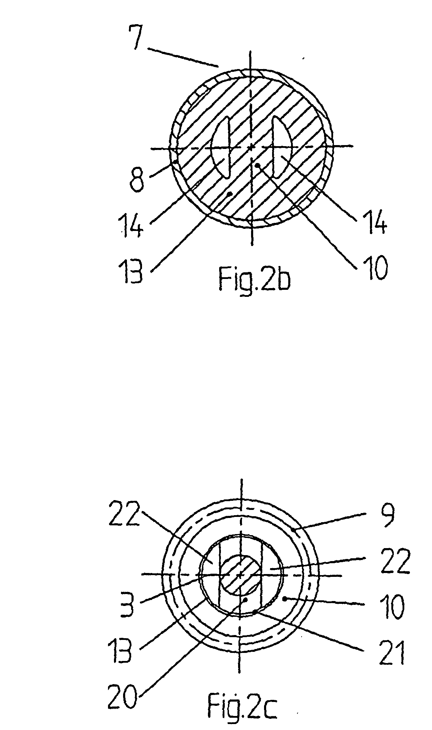

Figur 2b zeigt eine Draufsicht der Anordnung in Figur 2a entlang der Linie B-B. Das Tragelement 10 besteht aus einem zylindrischen Stab mit zwei abgeflachten Seitenflächen. Der Tragstab ist in das Kopfteil 13 eingesetzt, so dass zwischen seinen abgeflachten Seitenflächen und der Innenseite des Kopfteils 13 zwei Durchlässe 14 offenbleiben. Das Kopfteil 13 ist form- und/oder kraftschlüssig mit der Kerzenwand 8 des Kerzenfilters 7 verbunden.

Figur 2c zeigt eine Draufsicht auf die Anordnung gemäss Figur 2a. Zwischen der Aussenfläche 20 des Tragelements 10 und der Innenfläche 21 der Halteanordnung 3 wird ein Durchlasskanal 22 gebildet. Die Filterkerze 7 ist mit Spannmitteln 9 auf der Halteanordnung 3 festgehalten.

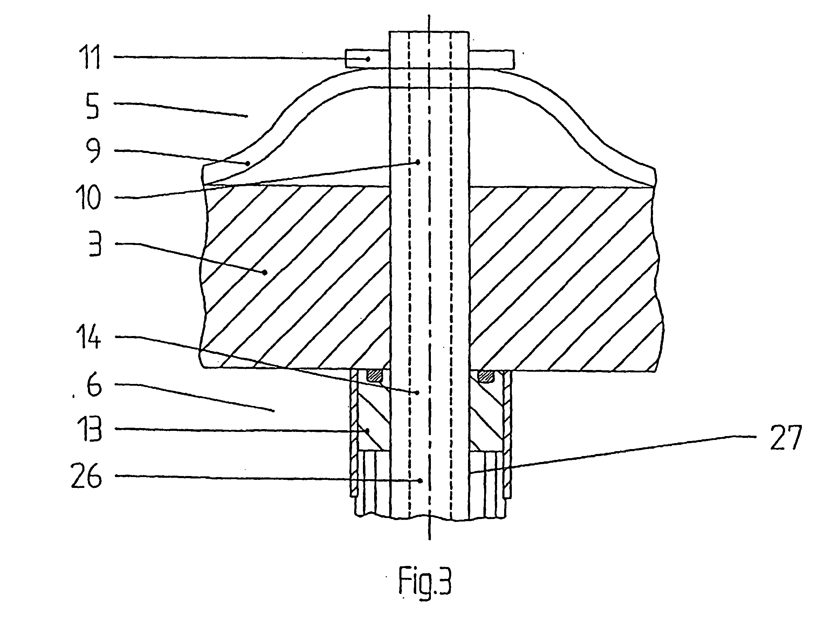

Figur 3 zeigt ein abgewandeltes Ausführungsbeispiel. Die Spannmittel 9 sind in der Form einer Federscheibe und das Tragelement 10 in der Form eines Steigrohrs 27 ausgebildet. Das Steigrohr 27 ist möglichst passgenau in die Öffnung der Halteanordnung 3 eingesetzt. Ausserdem ist das Steigrohr 27 einstückig mit dem Kopfteil 13 verbunden und durch den Durchlass 14 des Kopfteils 13 hindurchgeführt.

Es ist aber auch denkbar, das Steigrohr 27 gemäss Figur 3 derart zu dimensionieren, dass zwischen seiner äusseren Oberfläche und der inneren Oberfläche der Öffnung 4 des Halteanordnung 3 ebenfalls ein Durchlasskanal gebildet wird. Auf diese Weise kann ein optimaler Durchsatz von Flüssigkeit erreicht werden, ohne dass sich in kleinen Ringspalten zwischen der Öffnung in der Halteanordnung 3 und dem Steigrohr 27 Probleme ergeben.

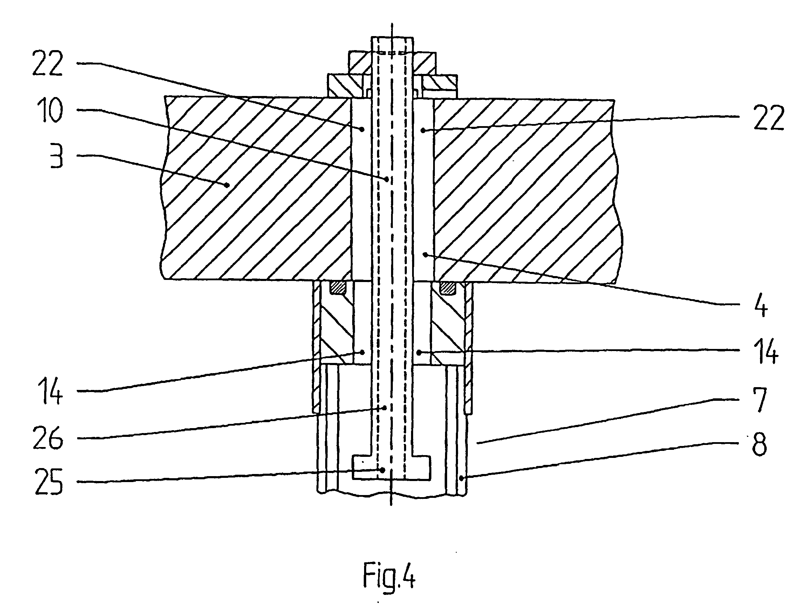

Figur 4 zeigt ein Ausführungsbeispiel, bei welchem eine solche Kombination erkennbar ist. Das Tragelement 10 weist eine Zusatzbohrung 26 auf. Im Ausführungsbeispiel gemäss Figur 4 wird das Tragelement 10 mittels einer äquivalenten, nicht beanspruchten Schraubvorrichtung auf der Filtratseite der Halteanordnung 3 abgestützt. Dadurch ist der Unfiltratraum beim Ausführungsbeispiel gemäss Figur 4 ebenfalls frei von Schraubverbindungen, schwer rückspülbare Toträume werden vermieden.

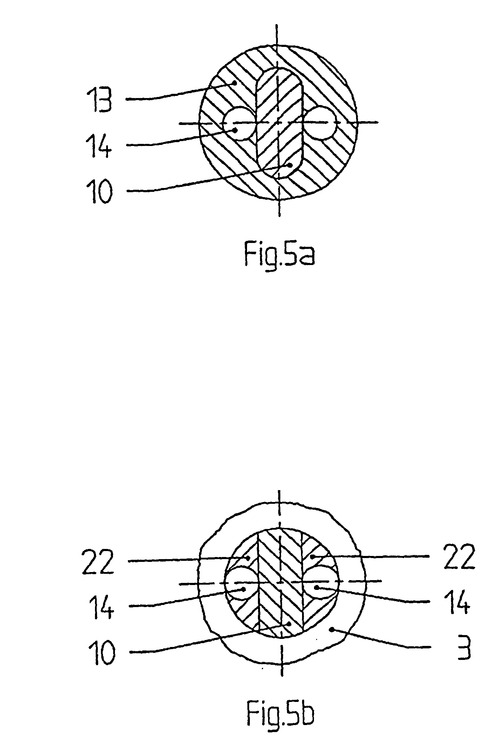

Figuren 5a und 5b zeigen den Figuren 2b und 2c ähnliche Anordnungen, bei welchen das Kopfteil 13 und das Tragelement 10 einstückig ausgebildet sind, wobei die Durchlässe 14 im Kopfteil 13 durch Bohrungen geformt sind.

Der Anschlag 11 am filtratseitigen Ende des Tragelements 10 wird vorzugsweise durch eine durch Drehen arretierbare Feststellscheibe gebildet. Denkbar sind aber beliebige, dem Fachmann bekannte Feststellvorrichtungen wie aufschnappbare Ringe, das Tragelement durchdringende Stifte oder Aufschraubverbindungen.

Durch die spezifische Konstruktion der erfindungsgemässen Filteranordnung, respektive der Filterkerze wird eine Filteranordnung erreicht, bei welcher schwer rückspülbare Toträume weitgehendst vermieden werden und/oder bei welcher problematische Schraubverbindungen vermieden werden. Mit einer solchen Filteranordnung wird auch das kalte Filtrieren von Flüssigkeiten wie Bier möglich, ohne dass die Gefahr von sich im Innern der Filteranordnung absetzenden Bakterien besteht.

## Patentansprüche

1. Filterkerze (7) für eine rückspülbare Filteranordnung (1), mit einer Kerzenwand (8) und einem die Kerzenwand (8) formund/oder kraftschlüssig haltenden Kopfteil (13), wobei das Kopfteil (13) wenigstens einen Durchlass (14) und eine Anschlagfläche (15) zur dichtenden Anlage an die Unfiltratseite (16) einer wenigstens eine Öffnung aufweisenden Halteanordnung (3) der rückspülbaren Filteranordnung (1) aufweist, wobei das Kopfteil (13) einstückig mit einem durch die Öffnungen (4) der Halteanordnung (3) führbaren Tragelement (10), welches in das Innere der Filterkerze ragt, ausgebildet oder verbunden ist, wobei das Tragelement (10) filtratseitig eine Anschlagfläche (11) für ein auf der Filtratseite (12) der Halteanordnung (3) abstützbares Spannmittel (9) aufweist und wobei die Filterkerze (7) mit dem Tragelement (10) derart an der Halteanordnung (3) befestigbar ist, dass der wenigstens eine Durchlass (14) in Verbindung mit einem Durchlasskanal (22), der zwischen der äusseren Oberfläche (20) des Tragelementes (10) und der inneren Oberfläche (21) der Öffnungen (4) der Halteanordnung (3) gebildet ist, bringbar ist.

2. Filterkerze (7) nach Anspruch 1, **dadurch gekennzeichnet, dass** das Tragelement (10) eine vertikale Zusatzbohrung (26) aufweist und als Steigrohr ausgebildet ist.

3. Filterkerze (7) nach einem der Ansprüche 1 oder 2, **dadurch gekennzeichnet, dass** das Kopfteil (13) um seine vertikale Achse exzentrisch angeordnete Durchlässe (14) aufweist, und dass die äussere Oberfläche (20) des Tragelements (10) einen maximalen Abstand von der vertikalen Achse des Kopfteils (13) aufweist, der kleiner ist als der minimale Abstand der Durchlässe (14) von der vertikalen Achse des Kopfteils (13).

4. Filterkerze (7) für eine rückspülbare Filteranordnung (1), mit einer Kerzenwand (8) und einem die Kerzenwand (8) formund/oder kraftschlüssig haltenden Kopfteil (13), wobei das Kopfteil (13) einen Durchlass (14) und eine Anschlagfläche (15) zur dichtenden Anlage an die Unfiltratseite (16) einer wenigstens eine Öffnung (4) aufweisenden Halteanordnung (3) der rückspülbaren Filteranordnung (1) aufweist, wobei das Kopfteil (13) einstückig mit einem durch den Durchlass (14) hindurchgeführten und passgenau in die Öffnung (4) der Halteanordnung (3) einsetzbaren Steigrohr (27), welches in das Innere der Filterkerze (7) ragt, ausgebildet oder verbunden ist und wobei das Steigrohr (27) filtratseitig eine Anschlagfläche (11) für auf der Filtratseite (12) der Halteanordnung (3) abstützbares Spannmittel (9) aufweist.

5. Filterkerze (7) nach einem der Ansprüche 1 bis 4, **dadurch gekennzeichnet, dass** das Kopfteil (13) ringförmig ausgebildet und mit dem Tragelement (10) oder Steigrohr (27) verschweisst ist.

6. Filterkerze (7) nach einem der Ansprüche 1 bis 5, **dadurch gekennzeichnet, dass** der in das Innere der Filterkerze (7) ragende Teil des Tragelements (10) oder des Steigrohres (27) eine Verteilanordnung (25) zum Verteilen eines Rückspülstromes auf die Kerzenwand (8) aufweist.

7. Rückspülbare Filteranordnung (1) mit einem Gehäuse (2) und mit einer wenigstens eine Öffnung (4) aufweisenden Halteanordnung (3), die das Gehäuse (2) in einen Filtratraum (5) und in einen Unfiltratraum (6) unterteilt, mit einer hängend in der jeweiligen Öffnung (4) der Halteanordnung (3) angeordneten Filterkerze (7) nach einem der Ansprüche 1 bis 6, wobei die Anschlagfläche (15) des Kopfteils (13) dichtend an der Unfiltratseite (16) der Halteanordnung (3) anliegt und das Spannmittel (9) sich auf der Anschlagfläche (11) und auf der Filtratseite (12) der Halteanordnung (3) abstützt.

8. Filteranordnung nach Anspruch 7, **dadurch gekennzeichnet, dass** die Halteanordnung (3) eine das Gehäuse (2) in Filtratraum (5) und Unfiltratraum (6) aufteilende Lochplatte ist.

9. Filteranordnung nach einem der Ansprüche 7 oder 8, **dadurch gekennzeichnet, dass** das Spannmittel (9) eine Spiralfeder oder eine Federscheibe ist.

10. Filteranordnung nach einem der Ansprüche 7 bis 9, **dadurch gekennzeichnet, dass** zwischen der Halteanordnung (3) und dem Kopfteil (13) ein Dichtmittel, insbesondere ein O-Ring (28) angeordnet ist.

## Claims

1. Filter cartridge (7) for a reversible flow filter arrangement (1), with a cartridge wall (8) and a head part (13) which holds the cartridge wall (8) in a form-fitting and/or non-positive manner, wherein the head part (13) has at least one passage (14) and a stop face (15) for sealingly resting against the unfiltrate side (16) of a holding arrangement (3) of the reversible flow filter arrangement (1), this holding arrangement having at least one opening, wherein the head part (13) is designed or connected in one piece with a carrier element (10) which can be guided through the openings (4) of the holding arrangement (3) and which projects into the interior of the filter cartridge, wherein the carrier element (10) on the filtrate side has a stop face (11) for a tensioning element (9) which can be supported on the filtrate side (12) of the holding arrangement (3), and wherein the filter cartridge (7) with the carrier element (10) can be fastened to the holding arrangement (3) in such a way that the at least one passage (14) can be brought into connection with a passage channel (22) which is formed between the outer surface (20) of the carrier element (10) and the inner surface (21) of the openings (4) of the holding arrangement (3).

2. Filter cartridge (7) in accordance with claim 1, **characterised in that** the carrier element (10) has a vertical additional drilled hole (26) and is designed as an ascending pipe.

3. Filter cartridge (7) in accordance with one of the claims 1 or 2, **characterised in that** the head part (13) has passages (14) distributed eccentrically around its vertical axis, and that the outer surface (20) of the carrier element (10) has a maximum distance from the vertical axis of the head part (13) which is smaller than the minimum distance of the passages (14) from the vertical axis of the head part (13).

4. Filter cartridge (7) for a reversible flow filter arrangement (1), with a cartridge wall (8) and a head part (13) which holds the cartridge wall (8) in a form-fitting and/or non-positive manner, wherein the head part (13) has a passage (14) and a stop face (15) for sealingly resting against the unfiltrate side (16) of a holding arrangement (3) of the reversible flow filter arrangement (1) this holding arrangement having at least one opening (4), wherein the head part (13) is designed or connected in one piece with an ascending pipe (27) which is led through the passage (14) and can be inserted with exact fit into the opening (4) of the holding arrangement (3), and which projects into the interior of the filter cartridge (7), and wherein the ascending pipe (27) on the filtrate side has a stop face (11) for a tensioning element (9) which can be supported on the filtrate side (12) of the holding arrangement (3).

5. Filter cartridge (7) in accordance with one of the claims 1 to 4, **characterised in that** the head part (13) is designed in a ring shape and is welded to the carrier element (10) or ascending pipe (27).

6. Filter cartridge (7) in accordance with one of the claims 1 to 5, **characterised in that** that part of the carrier element (10) or of the ascending pipe (27) which projects into the interior of the filter cartridge (7) has a distributor device (25) for distributing a reverse flow current against the cartridge wall (8).

7. Reversible flow filter arrangement (1) with a housing (2) and with a holding arrangement (3) which has at least one opening (4), and which divides the housing (2) into a filtrate space (5) and an unfiltrate space (6), with a filter cartridge (7) according to one of the claims 1 to 6 arranged suspended in the respective opening (4) of the holding arrangement (3), wherein the stop face (15) of the head part (13) sealingly rests against the unfiltrate side (16) of the holding arrangement (3), and the tensioning element (9) supports itself on the stop face (11) and on the filtrate side (12) of the holding arrangement (3).

8. Filter arrangement in accordance with claim 7, **characterised in that** the holding arrangement (3) is a perforated plate that divides the housing (2) into a filtrate space (5) and an unfiltrate space (6).

9. Filter arrangement in accordance with one of the claims 7 or 8, **characterised in that** the tensioning element (9) is a spiral spring or a spring washer.

10. Filter arrangement in accordance with one of the claims 7 to 9, **characterised in that** arranged between the holding arrangement (3) and the head part (13) is a sealing element, in particular an O-ring (28).

## Revendications

1. Bougie filtrante (7) pour un dispositif filtrant (1) apte à être lavé à contre-courant, comportant une paroi de bougie (8) et une partie supérieure (13) qui retient celle-ci par complémentarité de forme et/ou par force, étant précisé que la partie supérieure (13) comporte au moins un passage (14) et une surface de butée (15) destinée à être appliquée de manière étanche contre le côté produit à filtrer (16) d'un dispositif de fixation (3), pourvu d'au moins une ouverture, du dispositif filtrant (1) apte à être lavé à contre-courant, que la partie supérieure (13) est formée ou reliée d'une seule pièce avec un élément porteur (10) qui est apte à être guidé à travers les ouvertures (4) du dispositif de fixation (3) et qui dépasse à l'intérieur de la bougie filtrante, que l'élément porteur (10) présente, côté filtrat, une surface de butée (11) pour un moyen de serrage (9) apte à s'appuyer sur le côté filtrat (12) du dispositif de fixation (3), et que la bougie filtrante (7), avec l'élément porteur (10), est apte à être fixée au dispositif de fixation (3) de telle sorte que le ou les passages (14) puissent être reliés à un conduit de passage (22) qui est défini entre la surface extérieure (20) de l'élément porteur (10) et la surface intérieure (21) des ouvertures (4) du dispositif de fixation (3).

2. Bougie filtrante (7) selon la revendication 1, **caractérisée en ce que** l'élément porteur (10) présente un perçage supplémentaire vertical (26) et est conçu comme un tuyau ascendant.

3. Bougie filtrante (7) selon la revendication 1 ou 2, **caractérisée en ce que** la partie supérieure (13) présente des passages (14) disposés de manière excentrée autour de son axe vertical, et **en ce que** la surface extérieure (20) de l'élément porteur (10) présente par rapport à l'axe vertical de la partie supérieure (13) un écartement maximal qui est inférieur à l'écartement minimal des passages (14) par rapport à l'axe vertical de la partie supérieure (13).

4. Bougie filtrante (7) pour un dispositif filtrant (1) apte à être lavé à contre-courant, comportant une paroi de bougie (8) et une partie supérieure (13) qui retient celle-ci par complémentarité de forme et/ou par force, étant précisé que la partie supérieure (13) comporte un passage (14) et une surface de butée (15) destinée à être appliquée de manière étanche contre le côté produit à filtrer (16) d'un dispositif de fixation (3), pourvu d'au moins une ouverture (4), du dispositif filtrant (1) apte à être lavé à contre-courant, que la partie supérieure (13) est formée ou reliée d'une seule pièce avec un tuyau ascendant (27) qui traverse le passage (14), qui est apte à être placé de manière ajustée dans l'ouverture (4) du dispositif de fixation (3) et qui dépasse à l'intérieur de la bougie filtrante (7), et que le tuyau ascendant (27) présente, côté filtrat, une surface de butée (11) pour un moyen de serrage (9) apte à s'appuyer sur le côté filtrat (12) du dispositif de fixation (3).

5. Bougie filtrante (7) selon l'une des revendications 1 à 4, **caractérisée en ce que** la partie supérieure (13) a une forme annulaire et est soudée à l'élément porteur (10) ou au tuyau ascendant (27).

6. Bougie filtrante (7) selon l'une des revendications 1 à 5, **caractérisée en ce que** la partie de l'élément porteur (10) ou du tuyau ascendant (27) qui dépasse à l'intérieur de la bougie filtrante (7) comporte un dispositif de répartition (25) pour répartir un courant de lavage à contre-courant sur la paroi de bougie (8).

7. Dispositif filtrant (1) apte à être lavé à contre-courant, comportant un boîtier (2), un dispositif de fixation (3) qui présente au moins une ouverture (4) et qui divise le boîtier (2) en un espace de filtrat (5) et un espace de produit à filtrer (6), et une bougie filtrante (7) selon l'une des revendications 1 à 6 qui est suspendue dans l'ouverture correspondante (4) du dispositif de fixation (3), étant précisé que la surface de butée (15) de la partie supérieure (13) est appliquée de manière étanche contre le côté produit à filtrer (16) du dispositif de fixation (3) et que le moyen de serrage (9) s'appuie sur ladite surface de butée (11) et sur le côté filtrat (12) du dispositif de fixation (3).

8. Dispositif filtrant selon la revendication 7, **caractérisé en ce que** le dispositif de fixation (3) est constitué par une plaque perforée qui divise l'enveloppe (2) en un espace pour filtrat (5) et un espace pour produit à filtrer (6).

9. Dispositif filtrant selon la revendication 7 ou 8, **caractérisé en ce que** le moyen de serrage (9) est constitué par un ressort spiral ou un ressort plat.

10. Dispositif filtrant selon l'une des revendications 7 à 9, **caractérisé en ce qu'**un moyen d'étanchéité, en particulier un anneau torique (28), est disposé entre le dispositif de fixation (3) et la partie supérieure (13).
